(19) Europäisches Patentamt
European Patent Office
Office européen des brevets

(11) Veröffentlichungsnummer: **0 303 109 B1**

(12) **EUROPÄISCHE PATENTSCHRIFT**

(45) Veröffentlichungstag der Patentschrift: **18.03.92**

(51) Int. Cl.5: **C03C 17/36**

(21) Anmeldenummer: **88112215.4**

(22) Anmeldetag: **28.07.88**

(54) **Verfahren zum Herstellen von Scheiben mit hohem Transmissionsverhalten im sichtbaren Spektralbereich und mit hohem Reflexionsverhalten für Wärmestrahlung sowie durch das Verfahren hergestellte Scheiben.**

(30) Priorität: **08.08.87 DE 3726488**

(43) Veröffentlichungstag der Anmeldung:
**15.02.89 Patentblatt 89/07**

(45) Bekanntmachung des Hinweises auf die Patenterteilung:
**18.03.92 Patentblatt 92/12**

(84) Benannte Vertragsstaaten:
**AT BE CH DE ES FR GB LI LU NL SE**

(56) Entgegenhaltungen:
**DE-A- 3 543 178**
**US-A- 3 978 273**

**CHEMICAL ABSTRACTS, Band 106, Nr. 16, April 1987, Seite 312, Zusammenfassung Nr. 124627m, Columbus, Ohio, US; T. OYAMA et al.: "Mirror"; & JP-A-61 284 703 (ASAHI GLAS CO. LTD) 15-12-1986**

(73) Patentinhaber: **LEYBOLD AKTIENGESELL-SCHAFT**
**Wilhelm-Rohn-Strasse 25**
**W-6450 Hanau am Main 1(DE)**

(72) Erfinder: **Szczyrbowski, Joachim, Dr.**
**Ringofenstrasse 5**
**W-8758 Goldbach(DE)**
Erfinder: **Dietrich, Anton, Dr.**
**Heilbrunn 16**
**W-8441 Wiesenfelden(DE)**
Erfinder: **Hartig, Klaus, Dr.**
**Hanauer Strasse 17**
**W-6451 Ronneburg 2(DE)**

**EP 0 303 109 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Herstellen von Scheiben mit hohem Transmissionsverhalten im sichtbaren Spektralbereich und mit hohem Reflexionsverhalten für Wärmestrahlung und niedrigem Flächenwiderstand nach dem Oberbegriff des Patentanspruchs 8.

Derartige Scheiben sollen einen möglichst großen Anteil des sichtbaren Lichts durchlassen und einen möglichst großen Anteil des nichtsichtbaren spektralen Anteils der Sonnenstrahlung zurückhalten. Diese Maßnahme soll im Sommer verhindern, daß die unerwünschte Wärmestrahlung des Sonnenlichts in Räume eindringt. Besonders bei Kraftfahrzeugen ist dieser Effekt wegen der schräggestellten und dadurch sehr großen Front- und Heckscheiben besonders unerwünscht.

Durch die DE-OS 33 07 661 und die EP-OS 104 870 ist es bekannt, eine Silberschicht und eine unmittelbar auf das Silber aufgebrachte sehr dünne Metallschicht zwischen zwei Oxidschichten einzuschließen, wobei die dünne Metallschicht die Silberschicht gegen einen chemischthermischen Angriff beim Herstellen der obersten Oxidschicht schützt. Setzt man ein derartiges Schichtsystem jedoch Temperaturen oberhalb 150 °C aus, so erfolgt eine Diffusion des Silbers in die angrenzende Oxid- und/oder Metallschicht, wobei ein starker Anstieg des Flächenwiderstandes und eine entsprechende Verringerung der Transmissionswerte des Schichtsystems zu beobachten ist, d.h. zwei der wesentlichen Eigenschaften des Schichtsystems werden verschlechtert.

Durch die EP-PS 35 906 ist es bekannt, auf einer Seite oder beiden Seiten einer Silberschicht eine dünne metallische Schicht anzuordnen und dieses Schichtsystem gleichfalls zwischen zwei Oxidschichten einzubetten. Durch die dünne metallische Schicht soll eine größere Langzeitstabilität erreicht werden, wobei sich die Untersuchungen jedoch auf einen Temperaturbereich bis 120 °C beschränken. Da weiterhin durch das Absorptionsverhalten der metallischen Schichten eine Verschlechterung der optischen Transparenz der beschichteten Substrate eintritt, ist die Gesamtdicke der metallischen Schichten zur Erzielung eines bestimmten Transmissionsverhaltens begrenzt, und es soll daher bevorzugt nur eine einzige metallische Schicht auf der dem Substrat abgewandten Seite der Silberschicht angebracht werden, damit die Verschlechterung der Transmissionswerte in Grenzen gehalten werden kann. Es hat sich jedoch bei Verwendung von Substraten aus Mineralglas und einem derartigen Schichtsystem gezeigt, daß bei einer Erwärmung auf Temperaturen merklich oberhalb 150 °C gleichfalls eine Verschlechterung der Schichteigenschaften eintrat, und zwar nicht nur durch eine an sich wünschenswerte Erhöhung der Transmissionswerte im sichtbaren Bereich, sondern gleichzeitig auch durch einen unerwünschten Anstieg des Flächenwiderstandes, so daß die Bordspannung eines normalen Kraftfahrzeuges nicht mehr ausreicht, um im Winter eine ausreichende Beheizung durchzuführen. Weiterhin wurden Flecken und unerwünschte Lichtstreuungen beobachtet, die offensichtlich auf eine teilweise Agglomeratbildung sowie auf eine teilweise Diffusion des Silbers in die Oxidschichten hinein zurückzuführen ist.

Dieses Verhalten läßt nur den Schluß zu, daß die Dicke der metallischen Schicht bzw. Schichten im Hinblick auf die angestrebten hohen Transmissionswerte im sichtbaren Bereich, die teilweise auf gesetzlichen Vorschriften zurückzuführen sind (Kraftfahrzeugscheiben), für einen wirksamen Schutz der Silberschicht, inbesondere bei höheren Temperaturen, nicht mehr ausreichend ist.

Es ist auch bekannt, gekrümmte oder gewölbte Scheiben mit annähernd ähnlichem spektralen Verhalten dadurch herzustellen, daß man eine in andere Schichten eingebettete Silberschicht auf bereits verformte Glassubstrate aufbringt. Dies setzt jedoch spezielle Beschichtungsanlagen voraus, die der unterschiedlichen Formgebung der Substrate Rechnung tragen und durch komplizierte Blendenanordnungen die Einflüsse unterschiedlicher Abstände von Flächenelementen des Substrats von den Beschichtungsquellen und unterschiedlicher Auftreffwinkel des Schichtmaterials kompensieren.

Schließlich lassen sich mit einem Verfahren nach einer älteren Patentanmeldung (P 35 43 178.4) Substrate aus Mineralglas mittels eines Vakuumbeschichtungsverfahrens mit einem fünfschichtigen System versehen, wodurch der Scheibe ein hohes Reflexionsverhalten für Wärmestrahlung bei gleichzeitig hohem Transmissionsverhalten für sichtbares Licht verliehen wird. Das aufgebrachte Schichtsystem ist dabei so gewählt, daß die zunächst flache, beschichtete Scheibe einem Biegeprozeß unterzogen werden kann, bei dem die Erweichungstemperatur des Glases von ca. 650 °C erreicht wird, ohne die Eigenschaften der beschichteten Scheibe im negativen Sinne zu verändern. Die so behandelte Scheibe weist infolge der Beschichtung außerdem einen niedrigen elektrischen Widerstand auf, so daß die Scheibe durch Anlegen einer elektrischen Stromquelle beheizbar ist.

Werden derartige Scheiben mit einer weiteren unbeschichteten Scheibe zu Verbundscheiben in Sandwich-Bauweise verarbeitet, eignen sie sich insbesondere für den Einsatz in Kraftfahrzeugen als heizbare Front- oder Heckscheibe mit zusätzlicher Schutzfunktion gegen intensive Sonneneinstrahlung. Bei derartigen Verbundglasscheiben (VSG-Scheiben) befindet sich - ohne Lufteinschluß - zwischen den zwei dünnen Scheiben aus Mineralglas ein zähelastische Zwischenlage aus einem Kunststoff (z.B. Polyvinylbutyrat). Im Fall der beschichteten Scheibe nach der älteren Patentanmeldung steht die beschichtete Seite in direktem Kontakt mit dem Kunststoff. Die Aufgabe der Kunststoffzwischenlage besteht darin, die beiden Scheiben dauerhaft miteinander zu einer stabilen Einheit zu verbinden, die eine deutlich höhere Bruchfestigkeit aufweist als eine einzelne Scheibe. Dazu ist eine bestimmte Haftung des Kunststoffes auf der Glas- bzw. Schichtoberfläche erforderlich.

Weiterhin soll durch die intensive Verbindung des zähen Kunststoffes mit der Glasscheibe im Falle eines Bruches der Scheibe, z.B. bei einem Unfall, die Bildung und die Ablösung von großen Glassplittern verhindert werden, um Verletzungen so gering wie möglich zu halten.

Um diese Eigenschaften sicherzustellen, sind für den Einsatz derartiger Verbundscheiben in Kraftfahrzeugen bestimmte Prüfvorschriften erstellt worden und zu erfüllen. Diese Vorschriften und Testmethoden sind in Normen festgehalten. Bei der Durchführung dieser Prüfungen an VSG-Scheiben, die nach dem in der älteren Patentanmeldung angegebenen Verfahren hergestellt wurden, zeigte sich, daß der Verbund des Schichtsystems nicht ausreicht, da die Glasbruchstücke beim Zerschlagen der Scheibe an der Kunststoff-(Plast)Folie haften sollten.

Der vorliegenden Erfindung liegt deshalb die Aufgabe zugrunde, einen Schichtaufbau zu schaffen, der zu einer wesentlich verbesserten Haftung des Schichtpaketes untereinander führt, ohne die anderen notwendigen physikalischen Daten für die geplante Anwendung zu verschlechtern, insbesondere die hohe Lichttransmission, die elektrische Leitfähigkeit und die Beständigkeit des Schichtpaketes gegenüber dem Biegeprozeß.

Diese Aufgabe wird erfindungsgemäß dadurch gelöst, daß für die zweite und vierte Schicht eine Legierung aus etwa 80 Gewichtsprozenten Nickel und etwa 20 Gewichtsprozenten Chrom Verwendung findet, wobei man das Substrat mit dem gesamten Schichtpaket auf mindestens die Erweichungstemperatur des Glases erwärmt, in erwärmtem Zustand plastisch verformt und in verformten Zustand abkühlt.

Vorzugsweise werden die zweite und vierte Schicht in einer Dicke aufgebracht, die zu einer größeren Absorption im sichtbaren Bereich führt, als dies dem Endzustand entspricht, wobei die Temperaturbehandlung in oxidierender Atmosphäre durchgeführt wird, bis die mittlere Transmission im sichtbaren Bereich gegenüber derjenigen vor der Temperaturbehandlung um mindestens 5 %, vorzugsweise um mindestens 8 %, zugenommen hat.

Zweckmäßigerweise stellt man den maximalen Transmissionswert im sichtbaren Bereich durch Wahl der Dicke der Schicht zwei, drei und vier vor der Temperaturbehandlung auf 70 - 80 % und erhöht ihn durch die Temperaturbehandlung auf 80 - 87 %.

Mit Vorteil stellt man die Dicke der dritten Schicht (Silber) so ein, daß sich nach der Temperaturbehandlung ein Flächenwiderstand zwischen 2 und 10 Ohm/Quadrat ergibt.

Weitere Verfahrensschritte und Merkmale ergeben sich durch die in den Unteransprüchen gekennzeichneten Maßnahmen.

Scheiben, die mit der genannten Materialkombination herestellt wurden, zeigen auch nach dem Biegeprozeß eine Haftfestigkeit, die vergleichbar mit den Werten ist, die bei unbeschichteten Scheiben erzielt wurden. Die Zusammensetzung der gewählten Legierung sollte eingehalten werden, da beispielsweise bei zu hohen Anteilen von Nickel die für eine Windschutzscheibe geforderten Transmissionswerte für sichtbares Licht, die beispielsweise 80 ± 5 % beträgt, nicht erreicht werden können oder bei zu hohen Chromanteilen die Temperaturstabilität nicht ausreicht, um die Belastungen des Biegeprozesses ohne Schaden für das Schichtpaket zu überstehen.

Die Erfindung läßt die verschiedensten Ausführungsmöglichkeiten zu; eine davon ist nachstehend anhand einer den Schichtaufbau darstellenden Zeichnung und zweier Diagramme näher beschrieben.

In Figur 1 ist mit S das Substrat bezeichnet, das aus einem Mineralglas wie beispielsweise einem übliche Float-Glas wie einem Natrium-Silikat-Glas besteht. Auf dieses Substrat ist eine erste Schicht 1 aus einem Oxid aus der Gruppe Zinnoxid, Siliziumdioxid, Aluminiumoxid, Tantaloxid und Zirkonoxid oder deren Mischoxide aufgebracht. Darauf befindet sich eine zweite Schicht 2 aus etwa 80 Gewichtsprozenten Nickel und etwa 20 Gewichtsprozenten Chrom. Als nächstes folgt eine dritte Schicht 3 aus Silber oder einer Silberlegierung mit mindestens 50 Gewichtsprozent Silberanteil und hierauf wiederum eine vierte Schicht 4 aus etwa 80 Gewichtsprozenten Nickel und etwa 20 Gewichtsprozenten Chrom, und als Abschluß- oder Deckschicht folgt eine fünfte Schicht 5, die wie die erste Schicht wiederum aus einem Oxid aus der Gruppe Zinnoxid, Siliziumdioxid, Aluminiumoxid, Tantaloxid und Zirkonoxid oder deren Mischoxide besteht. Es versteht sich, daß im Hinblick auf die dritte Schicht 3 aus Silber kein symmetrischer Schichtaufbau vorliegen muß, sondern daß die Schichtmaterialien innerhalb der in einer Gruppe angegebenen Metalle bzw. Oxide auch variiert werden können.

Bei dem in den Diagrammen dargestellten praktischen Ausführungsbeispielen werden in einer Vakuumbeschichtungsanlage für Flachglas, die mit Hochleistungs-Zerstäubungskathoden (Magnetron-Kathoden) ausgerüstet ist, Glasscheiben aus Float-Glas mit einer Schichtenfolge $SnO_2$ - NiCr - Ag - NiCr - $SnO_2$ gemäß Figur 1 beschichtet, wobei die einzelnen Schichten folgende Dicken aufweisen:

| | | |
|---|---|---|
| Schicht 1: | $SnO_2$ | 35 nm |
| Schicht 2: | NiCr | ca. 2 nm (*) |
| Schicht 3: | Ag | 20 nm |
| Schicht 4: | NiCr | ca. 2 nm (*) |
| Schicht 5: | $SnO_2$ | 35 nm |

(*) Experimentell angepaßt, so daß die maximale Transmission des Zwischenproduktes (d.h. vor der Temperaturbehandlung des Biegeprozesses) im sichtbaren Bereich 77 % betrug.

Die optischen Daten der ungetemperten und getemperten beschichteten Scheiben sind in Figur 2 dargestellt. Diese Scheiben wurden zusammen mit einer unbeschichteten Float-Glasscheibe gleicher Abmessungen in einem Temperofen bei gleichmäßiger Temperaturverteilung einem Biegeprozeß unterzogen, bei dem Spitzentemperaturen von ca. 640 °C über einen Zeitraum von etwa 5 Minuten auftreten. Die Lichttransmission der beschichteten Scheibe nach diesem Prozeß beträgt nach dem Erkalten 85 %, und der Flächenwiderstand zeigt einen Wert von 4,2 Ohm/Quadrat. Danach werden die beiden jeweils zusammengebogenen Scheiben zu VSG-Verbundscheiben weiterverarbeitet, was durch Zwischenlegen einer Kunststoffolie aus Polyvinylbutyrat und Anwendung eines thermischen Prozesses unter Vakuum erfolgte. Werden die resultierenden VSG-Scheiben nun untersucht, dann ergeben sich Werte von 77 % für die Lichttransmission und 14 % für die Lichtreflexion; Werte, die innerhalb der Grenzen liegen, die für eine Zulassung der Scheibe als Automobilfrontscheibe gefordert werden. Gleichzeitig werden bei den Sicherheitsprüfungen nach den einschlägigen Normen (i.e. Kugelfalltest etc.) die geforderten Werte erreicht, insbesondere ist dabei die Haftung des beschichteten Glases an der Folie ausreichend, um die Ablösung von größeren Glasbruchstücken zu verhindern.

Die Haftfestigkeit des Schichtsystems am Glas wurde in Abhängigkeit von der Temperatur getestet. Die Ergebnisse sind in Figur 3 zu sehen. Die Temperzeit beträgt jeweils 10 Minuten. Die besten Ergebnisse wurden mit NiCr (80/20 Gewichtsprozent) als Schicht 2 und 4 erzielt (Figur 3, Kurve 3). Für dieses Material ist die Haftung unabhängig von der Tempertemperatur. Der ermittelte Wert von ca. 400 $kp/cm^2$ ist vergleichbar mit der Haftfestigkeit einer Oxidschicht auf Glas.

## Patentansprüche

**1.** Verfahren zum Herstellen von Scheiben mit hohem Transmissionsverhalten im sichtbaren Spektralbereich und mit niedrigem Flächenwiderstand und hohem Reflexionsverhalten für Wärmestrahlung durch Beschichtung von aus Mineralglas bestehenden Substraten mit
a) einer ersten Schicht aus einem Oxid aus der Gruppe Zinnoxid, Siliziumdioxid, Aluminiumoxid, Tantaloxid und Zirkonoxid oder deren Mischoxide, mit
b) einer zweiten Schicht aus Nickel oder einer Legierung mit mindestens 50 Gewichtsprozent Anteil dieses Metalls, mit
c) einer dritten Schicht aus Silber oder einer Silberlegierung mit mindestens 50 Gewichtsprozent Silberanteil, mit
d) einer vierten Schicht aus Nickel oder aus der die zweite Schicht bildenden Legierung und mit
e) einer fünften Schicht aus einem Oxid aus der die erste Gruppe bildenden Oxide,
**dadurch gekennzeichnet,** daß für die zweite und vierte Schicht eine Legierung aus etwa 80 Gewichtsprozenten Nickel und etwa 20 Gewichtsprozenten Chrom Verwendung findet, wobei man das Substrat mit dem gesamten Schichtpaket a) bis 3) auf mindestens die Erweichungstemperatur des Glases erwärmt, in erwärmtem Zustand plastisch verformt und im verformten Zustand abgekühlt.

**2.** Verfahren nach Anspruch 1, **dadurch gekennzeichnet,** daß man
a) die Schichten b) und d) in einer Dicke aufbringt, die zu einer größeren Absorption im sichtbaren Bereich führt, als dies dem Endzustand entspricht und
b) die Temperaturbehandlung in oxidierender Atmosphäre durchführt, bis die mittlere Transmission im sichtbaren Bereich gegenüber derjenigen vor der Temperaturbehandlung um mindestens 5 %, vorzugsweise um mindestens 8 %, zugenommen hat.

**3.** Verfahren nach Anspruch 2, **dadurch gekennzeichnet,** daß man den maximalen Transmissionswert im sichtbaren Bereich durch Wahl der Dicke der Schichten b), c) und d) vor der Temperaturbehandlung auf 70 - 80 % einstellt und ihn durch die Temperaturbehandlung auf 80 - 87 % erhöht.

**4.** Verfahren nach Anspruch 1, **dadurch gekennzeichnet,** daß man die Dicke der Schicht c) [Silber] so einstellt, daß sich nach der Temperaturbehandlung ein Flächenwiderstand zwischen 2 und 10 Ohm/Quadrat ergibt.

5. Verfahren nach Anspruch 1, **dadurch gekennzeichnet,** daß die fünfte Schicht e) aus Zinnoxid mit Anteilen von 4 bis 6 Gewichtsprozenten Antimon oder Fluor oder aus Indiumoxid mit 5 bis 15 Gewichtsprozenten Zinn versehen wird.

6. Verfahren nach Anspruch 1, **dadurch gekennzeichnet,** daß man die erste a) und die fünfte e) Schicht durch Kathodenzerstäubung von Targets aus den metallischen Oxidbildern in reaktiver Atmosphäre ($O_2$ und Edelgas) erzeugt und die zweite b), dritte c) und vierte d) Schicht durch Kathodenzerstäubung von Targets aus den genannten Metallen bzw. Metallegierungen in neutraler Atmosphäre (Edelgas).

7. Verfahren nach Anspruch 1, **dadurch gekennzeichnet,** daß man die zweite b) und die vierte d) Schicht aus mindestens einem der genannten Metalle, insbesondere Nickel, erzeugt, das mit mindestens einem metallischen Zusatz aus der Gruppe 4b, 5b, 6b des periodischen Systems versetzt ist, wobei der Gesamtzusatz 30 Gewichtsprozente nicht überschreitet.

8. Scheibe mit hohem Transmissionsverhalten im sichtbaren Spektralbereich und mit hohem Reflexionsverhalten für Wärmestrahlung und niedrigem Flächenwiderstand, mit einem aus Mineralglas bestehenden Substrat, mit einer ersten Schicht aus einem Oxid aus der Gruppe Zinnoxid, Siliziumdioxid, Aluminiumoxid, Tantaloxid und Zirkonoxid oder deren Mischoxide, mit einer zweiten Schicht aus etwa 80 Gewichtsteilen Nickel und 20 Gewichtsteilen Chrom, mit einer dritten Schicht aus Silber oder einer Silberlegierung mit mindestens 50 Gewichtsprozenten Silberanteil, mit einer vierten Schicht aus einer Legierung CrNi 20/80 und mit einer fünften Schicht aus einem Oxid aus der die erste Gruppe bildenden Oxide, wobei die beschichtete Scheibe nachträglich gebogen ist.

## Claims

1. Process for manufacturing panes with a high level of transmission in the visible spectrum and with low area resistance and a high level of reflection of heat radiation by the coating of substrates composed of inorganic glass, with
   a) a first layer composed of an oxide from the group tin oxide, silicon dioxide, aluminium oxide, tantalum oxide and zirconium oxide or mixtures of their oxides, with
   b) a second layer composed of nickel or an alloy with at least 50 % by weight of this metal, with
   c) a third layer composed of silver or a silver alloy with at least 50 % by weight silver, with
   d) a fourth layer composed of nickel or of the alloy forming the second layer, and with
   e) a fifth layer, composed of an oxide from the oxides forming the first group,

   characterised in that for the second and fourth layer an alloy composed of approximately 80 % by weight nickel and approximately 20 % by weight chromium is used, and the substrate is heated with the whole system of layers a) to e) to at least the melting point of the glass, is moulded into shape in the heated state, and is cooled in the moulded state.

2. Process according to claim 1, characterised in that,
   a) the layers b) and d) are applied in a thickness which results in a greater absorption in the visible spectrum than corresponds to the final state and
   b) the heat treatment is carried out in an oxidising atmosphere until the average transmission in the visible spectrum has increased relative to the transmission before heat treatment by at least 5 %, preferably by at least 8 %.

3. Process according to claim 2, characterised in that the maximum transmission in the visible spectrum is set to 70 - 80 % before heat treatment by the choice of thickness of the layers b), c) and d), and is increased by heat treatment to 80 - 87 %.

4. Process according to claim 1, characterised in that the thickness of the layer c) [silver] is set so that after heat treatment, an area resistance of between 2 and 10 Ohm/square is produced.

5. Process according to claim 1, characterised in that the fifth layer e) composed of tin oxide is provided with proportions of 4 to 6 % by weight antimony or fluoride or of indium oxide with 5 to 15 % by weight tin.

6. Process according to claim 1, characterised in that the first a) and the fifth e) layers are formed by cathode sputtering from targets composed of the metal oxide formers in a reactive atmosphere ($O_2$ and noble gas) and the second b), third c) and fourth d) layers are formed by cathode sputtering from targets composed of the above-mentioned metals or metal alloys in a neutral atmosphere (noble gas).

**7.** Process according to claim 1, characterised in that the second b) and fourth d) layers are formed from at least one of the above-mentioned metals, in particular nickel, which is displaced by at least one metal additive from the group 4b, 5b, or 6b from the periodic table, in which case the total additive does not exceed 30 % by weight.

**8.** Pane with a high level of transmission in the visible spectrum and with a high level of reflection of heat radiation and low area resistance, with an inorganic glass substrate, with a first layer composed of an oxide from the group tin oxide, silicon dioxide, aluminium oxide, tantalum oxide and zirconium oxide or mixtures of their oxides, with a second layer composed of approximately 80 % by weight nickel and 20 % by weight chromium, with a third layer composed of silver or of a silver alloy with a silver content of at least 50 % by weight silver, with a fourth layer composed of a 20/80 CrNi alloy, and with a fifth layer composed of an oxide from the oxides forming the first group, the coated pane being subsequently curved.

**Revendications**

**1.** Procédé de fabrication de vitres à pouvoir de transmission élevé dans le domaine spectral visible et à résistance superficielle faible et à pouvoir de réflexion élevé pour le rayonnement thermique, par revêtement de substrats en verre minéral à l'aide de :

a) une première couche d'un oxyde du groupe oxyde d'étain, dioxyde de silicium, oxyde d'aluminium, oxyde de tantale et oxyde de zircon ou des mélanges de ces oxydes,
b) une seconde couche en nickel ou en un alliage contenant au moins 50 % en poids de ce métal,
c) une troisième couche en argent ou en un alliage d'argent contenant au moins 50 % en poids d'argent,
d) une quatrième couche en nickel ou en l'alliage formant la seconde couche et
e) une cinquième couche en un oxyde choisi parmi les oxydes formant le premier groupe,

caractérisé en ce qu'on utilise pour la seconde et la quatrième couches un alliage composé d'environ 80 % en poids de nickel et d'environ 20 % en poids de chrome, le substrat portant l'ensemble des couches a) à e) étant chauffé à une température égale à au moins la température de ramollissement du verre, déformé plastiquement à l'état chauffé et refroidi à l'état déformé.

**2.** Procédé selon la revendication 1, caractérisé en ce que :

a) on dépose les couches b) et d) en une épaisseur entraînant une absorption dans le domaine visible supérieure à celle correspondant à l'état final et
b) on réalise le traitement thermique dans une atmosphère oxydante jusqu'à ce que la transmission moyenne dans le domaine visible ait augmenté d'au moins 5 %, de préférence d'au moins 8 %, par rapport à celle avant le traitement thermique.

**3.** Procédé selon la revendication 2, caractérisé en ce qu'on fixe la valeur maximale de la transmission dans le domaine visible à 70 à 80 % avant le traitement thermique, par sélection de l'épaisseur des couches b), c) et d), et qu'on l'amène à 80-87 % par le traitement thermique.

**4.** Procédé selon la revendication 1, caractérisé en ce qu'on fixe l'épaisseur de la couche c) [argent] de façon à obtenir après le traitement thermique une résistance superficielle comprise entre 2 et 10 Ohm/carré.

**5.** Procédé selon la revendication 1, caractérisé en ce que la cinquième couche e) en oxyde d'étain contient des proportions de 4 à 6 % en poids d'antimoine ou de fluor ou est en oxyde d'indium contenant de 5 à 15 % en poids d'étain.

**6.** Procédé selon la revendication 1, caractérisé en ce qu'on produit la première couche a) et la cinquième couche e) par pulvérisation cathodique sur des cibles d'oxydes métalliques dans une atmosphère réactive ($O_2$ et gaz noble) et la seconde couche b), la troisième c) et la quatrième d) par pulvérisation cathodique sur des cibles des métaux et alliages métalliques cités dans une atmosphère neutre (gaz noble).

**7.** Procédé selon la revendication 1, caractérisé en ce qu'on produit la seconde couche b) et la quatrième couche d) à l'aide d'au moins un des métaux cités, notamment le nickel, contenant au moins un additif métallique du groupe 4b, 5b, 6b du système périodique des éléments, la quantité totale d'additifs ne dépassant pas 30 % en poids.

**8.** Vitre à pouvoir de transmission élevé dans le domaine spectral visible et à pouvoir de réflexion élevé pour le rayonnement thermique et à résistance superficielle faible, composée d'un substrat en verre minéral, d'une première couche en un oxyde du groupe oxyde d'étain, dioxyde de silicium, oxyde d'aluminium, oxyde de tantale et oxyde de zircon ou des mélanges de ces oxydes, d'une seconde couche composée d'environ 80 parties en poids de nickel et 20 % en poids de chrome, d'une troisième couche en argent ou en un alliage d'argent contenant au moins 50 % en poids d'argent, d'une quatrième couche en un alliage CrNi 20/80 et d'une cinquième couche en un oxyde choisi parmi les oxydes formant le premier groupe, la vitre revêtue étant cintrée ultérieurement.

FIG.1

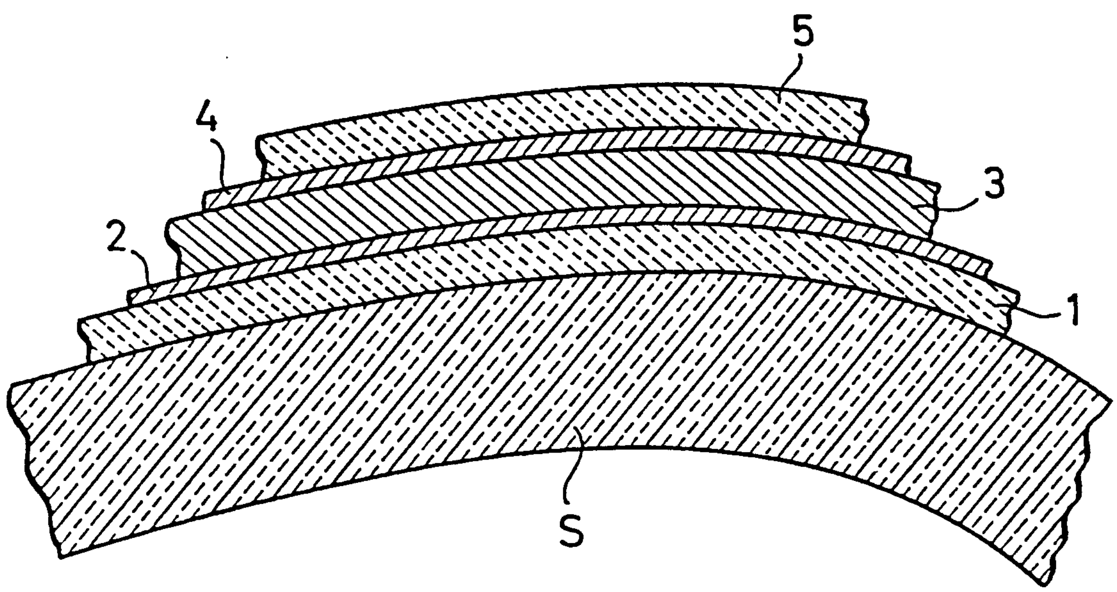

Fig. 2

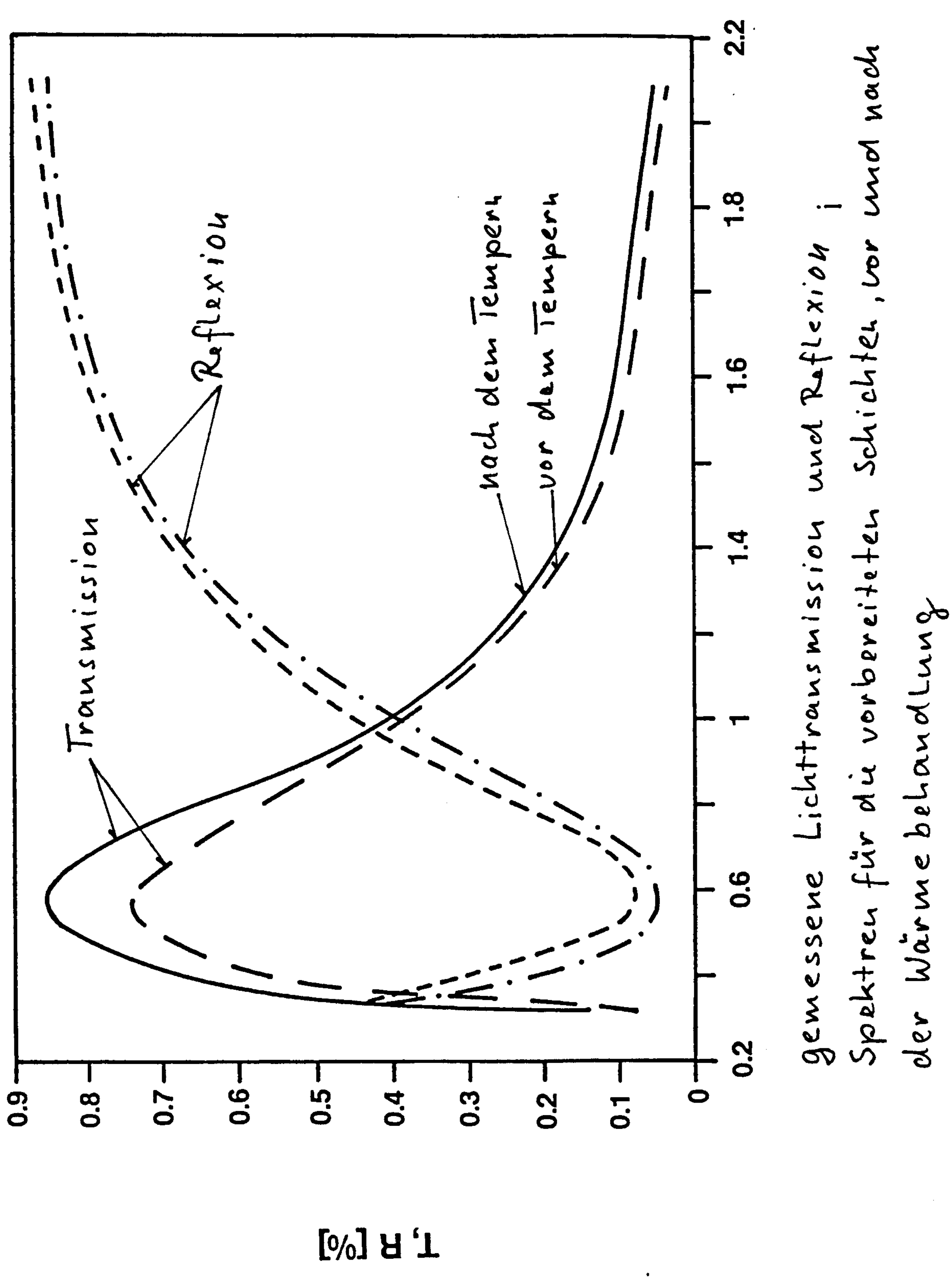
Wellenlänge (µm)
0.2
0.6
1
1.4
1.6
1.8
2.2
T, R [%]
0
0.1
0.2
0.3
0.4
0.5
0.6
0.7
0.8
0.9
Transmission
Reflexion
nach dem Tempern
vor dem Tempern
gemessene Lichttransmission und Reflexion
Spektren für die vorbereiteten Schichten, vor und nach
der Wärmebehandlung

FIG. 3

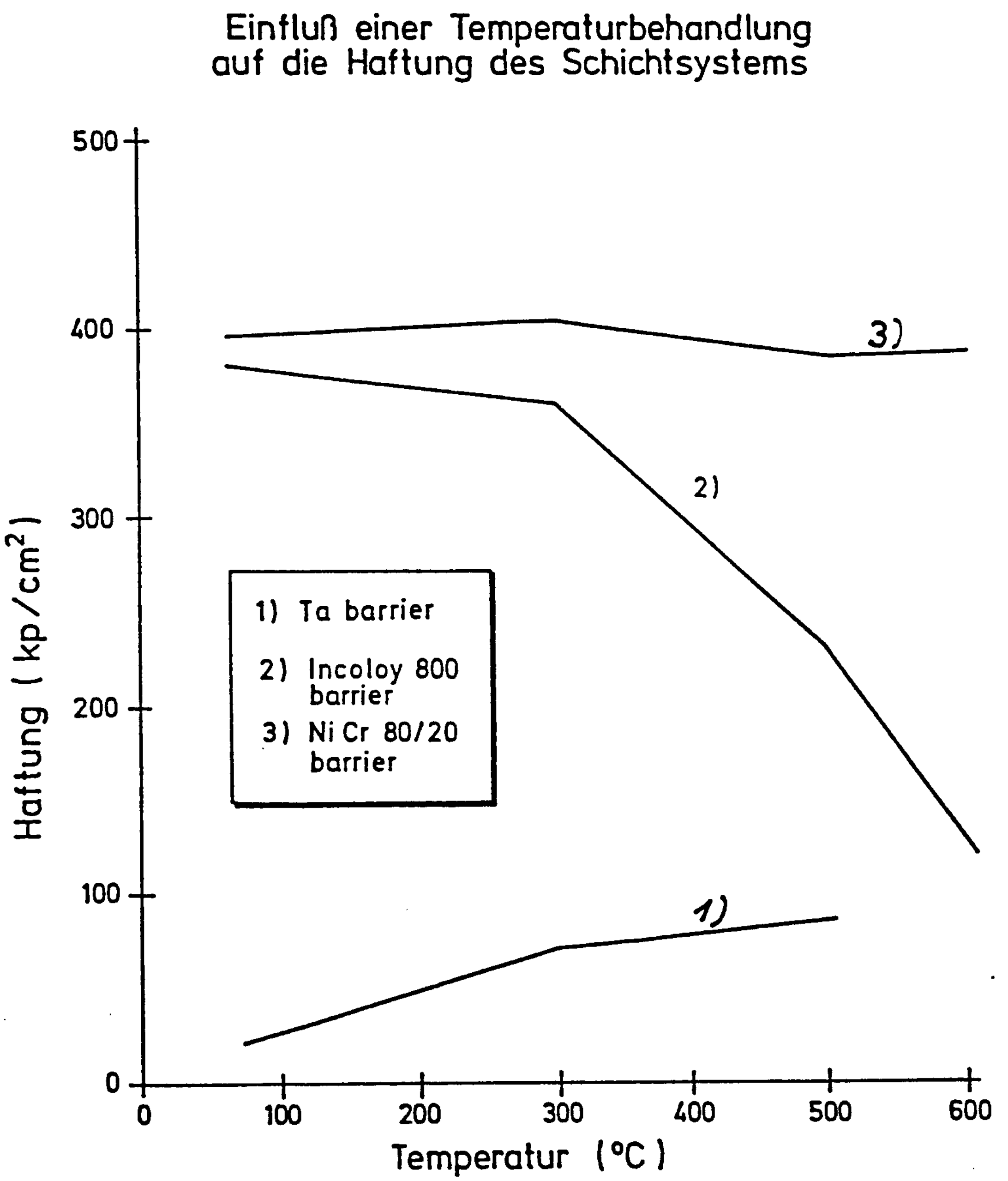
Einfluß einer Temperaturbehandlung
auf die Haftung des Schichtsystems
Haftung (kp/cm²)
500
400
300
200
100
0
0
100
200
300
400
500
600
Temperatur (°C)
1) Ta barrier
2) Incoloy 800 barrier
3) Ni Cr 80/20 barrier
1)
2)
3)